# EUROPÄISCHE PATENTSCHRIFT

(11) **EP 1 099 075 B1**
(45) Veröffentlichungstag und Bekanntmachung des Hinweises auf die Patenterteilung: **06.03.2002**
(21) Anmeldenummer: 99938270.8
(22) Anmeldetag: 16.07.1999
(51) Int. Cl.: F16L 41/00, E21F 17/10

(54) **VORRICHTUNG ZUM VERSORGEN EINES LÄNGS EINER DRUCKLUFTLEITUNG VERFAHRBAREN VERBRAUCHERS**
DEVICE FOR SUPPLYING A CONSUMER DISPLACED ALONGSIDE A COMPRESSED AIR LINE
DISPOSITIF POUR ALIMENTER UN CONSOMMATEUR POUVANT ETRE DEPLACE LE LONG D'UNE CONDUITE D'AIR COMPRIME

(30) Priorität: 22.07.1998 DE 29813062 U
(43) Veröffentlichungstag der Anmeldung: 16.05.2001
(73) Patentinhaber: Wampfler Aktiengesellschaft, 79576 Weil am Rhein-Maerkt (DE)
(72) Erfinder: SCHOPFERER, Jörg, D-79588 Efringen-Kirchen (DE)
(74) Vertreter: Rapp, Bertram, Dr.
(86) Internationale Anmeldenummer: EP9905067
(87) Internationale Veröffentlichungsnummer: WO0005530

(56) Entgegenhaltungen:
- EP-A- 0 334 995
- DE-A- 2 943 504
- DE-B- 1 103 866
- US-A- 3 952 492

## Beschreibung

Die Erfindung betrifft eine Vorrichtung zum Versorgen eines längs einer Druckluftleitung verfahrbaren Verbrauchers nach dem Oberbegriff des Anspruches 1.

Eine solche Vorrichtung ist Gegenstand der CH-A-15021. Diese weist eine Druckluftleitung auf, die mit einem längs verlaufenden Schlitz versehen ist. Dieser Schlitz wird abgedichtet durch zwei in das Innere der Druckluftleitung ragende Dichtlippen. Zum Abgriff der Druckluft ist ein hohler Rüssel vorgesehen, der in das Innere der Druckluftleitung ragt und hierbei die beiden Dichtlippen auseinander spreizt. Der Rüssel ist längs des Schlitzes verfahrbar.

In Verfahrrichtung gesehen unmittelbar vor und hinter dem Rüssel sind die Dichtlippen ebenfalls auseinandergespreizt, so daß über die dort gebildeten keilförmigen Spalte Druckluft ins Freie entweichen kann. Hierdurch tritt ein unerwünschter Druckabfall in der Druckluftleitung auf.

Es besteht die Aufgabe, die Vorrichtung der eingangs genannten Art so auszubilden, daß Druckluftverluste an die Umgebung vermieden werden.

Die DE-B-1 103 866 weist eine Vorrichtung nach dem Oberbegriff des Anspruches 1 auf. Der Rüssel ist mit einer Keilschiene versehen, die sich nach ihren Enden hin verjüngt und die das Dichtband nach außen weg vom Schlitz der Druckluftleitung drückt. Der Rüssel lagert an seinen Enden vor und hinter Keilschienerollen, die das Dichtband gegen den Schlitz und die Ränder des Dichtbandes gegeneinander drücken.

Bei der Vorrichtung und nach der EP-A- 0 334 995 lagert das Rohrstück drei Rollen, die ein Dichtband über seine Breite hinweg im Bereich des Rüssels in das Innere der Druckluftleitung deformieren. Hierbei befindet sich eine mittlere Rolle im Abstand zum Schlitz der Druckluftleitung und über diese ist das Dichtband geführt, während zwei seitliche Rollen das Dichtband gegen den Schlitz drücken.

Bei der Vorrichtung nach der DE-A-2 943 504 weist der Rüssel eine ins Innere der Druckluftleitung weisende Rampe auf, über die das Dichtband über seine Breite hinweg geführt ist. Beiderseits dieser Rampe lagert das Rohrstück ballige Rollen, die das Dichtband gegen den Schlitz der Druckluftleitung drücken.

Gelöst wird diese Aufgabe mit den Merkmalen des Anspruches 1. Vorteilhafte Ausgestaltungen sind den Unteransprüchen entnehmbar.

Zwei Ausführungsbeispiele werden nachfolgend anhand der Zeichnungen näher erläutert. Es zeigen:
- **Figur 1**: eine teilweise im Schnitt dargestellte Seitenansicht einer ersten Ausführungsform;
- **Figur 2**: eine teilweise im Schnitt dargestellte Seitenansicht dieser ersten Ausführungsform;
- **Figur 3**: einen Schnitt längs der Linie A-A in Figur 2;
- **Figur 4**: einen Schnitt längs der Linie B-B in Figur 2;
- **Figur 5**: einen Schnitt längs der Linie C-C in Figur 2;
- **Figur 6**: eine Ansicht von unten bei einer zweiten Ausführungsform;
- **Figur 7**: einen Schnitt längs der Linie C-C in Figur 6;
- **Figur 8**: einen Schnitt längs der Linie A-A in Figur 6 und
- **Figur 9**: einen Schnitt längs der Linie B-B in Figur 6.

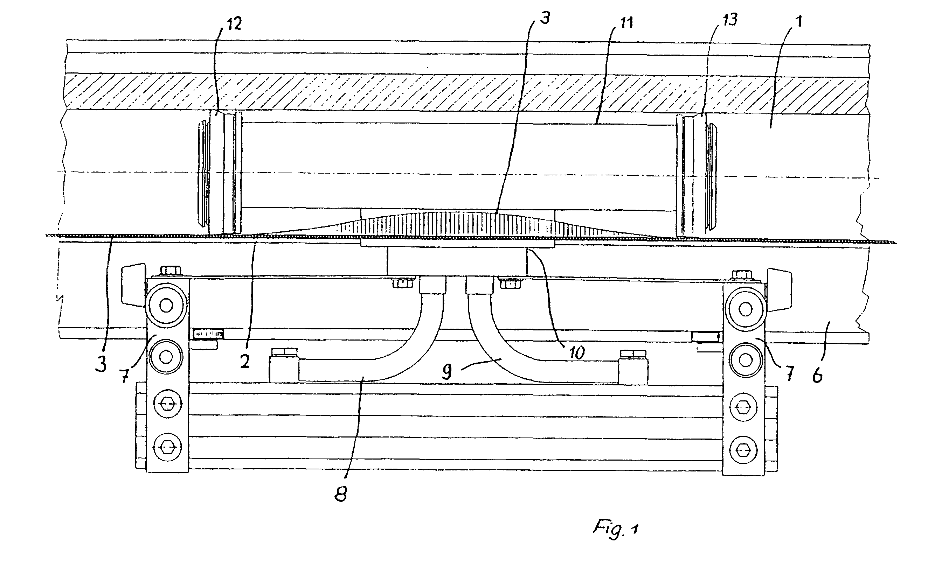

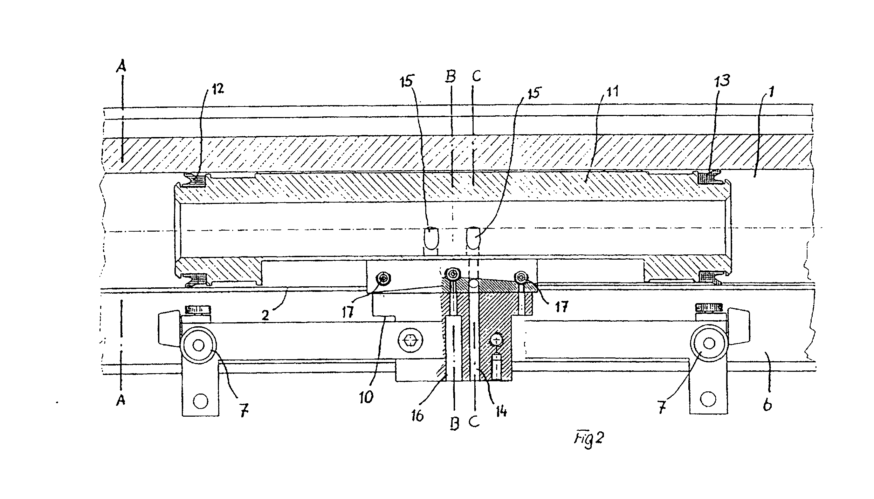

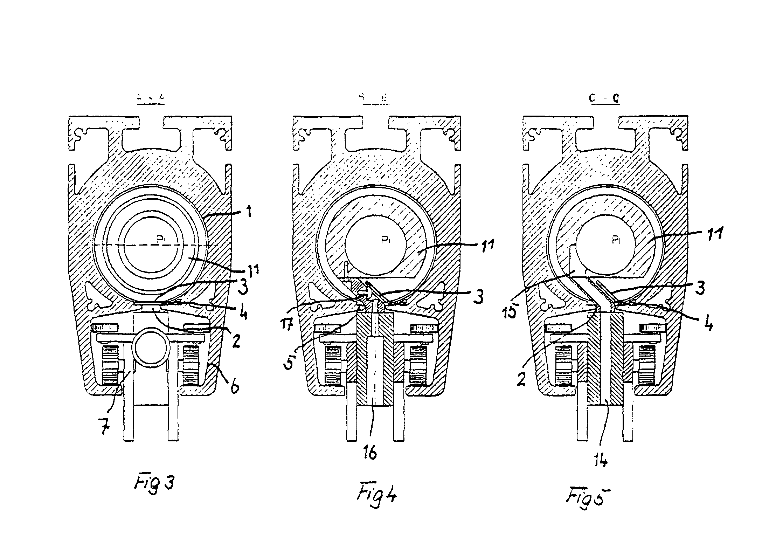

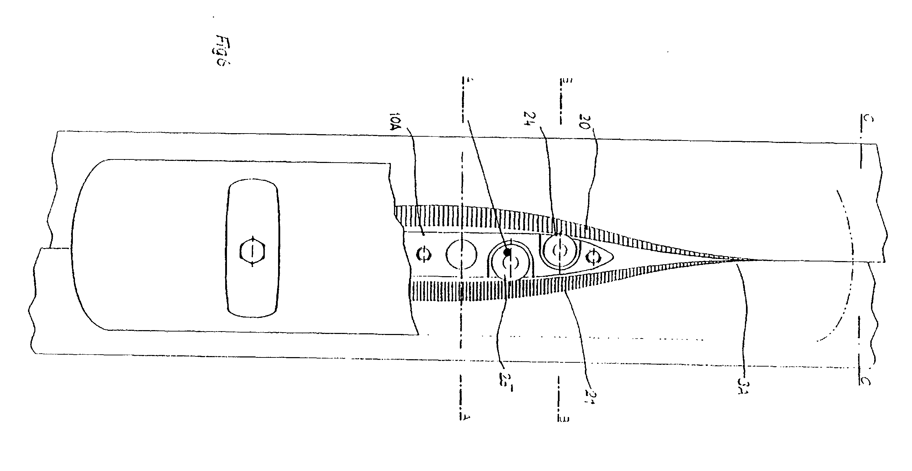

Gemäß den Figuren 1 bis 5 ist eine Druckluftleitung 1 kreisförmigen Querschnitts vorgesehen. Diese Druckluftleitung weist an ihrer Unterseite einen längs verlaufenden Schlitz 2 auf. Dieser Schlitz 2 wird überdeckt durch ein flaches elastisches Dichtband 3, dessen eine Längsseite mit dem einen Schlitzrand 4 verbunden ist. Die andere, freie Längsseite des Dichtbands 3 liegt auf einer innenseitigen Stufe 5 am anderen Schlitzrand auf. Infolge des in der Druckluftleitung 1 herrschenden Innendrucks dichtet somit das Dichtband 3 den Schlitz 2 ab.

Die Druckluftleitung 1 weist in ihrem unteren Bereich Führungen 6 auf, in denen das Fahrwerk 7 eines Verbrauchers geführt ist. Über zwei starre Leitungen 8, 9 ist mit dem Fahrwerk 7 ein Rüssel 10 verbunden. Dieser Rüssel 10 verläuft durch den Schlitz 2 und untergreift das Dichtband 3. Dieses Dichtband 3 wird dabei von der Stufe 5 abgehoben.

Mit dem Rüssel 10 starr verbunden ist ein Rohrstück 11 im Innern der Druckluftleitung 1. Dieses Rohrstück 11 weist an seinen Enden jeweils eine Abdichtung 12, 13 auf. Durch den Rüssel 10 verlaufen zwei Bohrungen 14, von denen die eine mit der Leitung 8 und die andere mit der Leitung 9 verbunden ist. Die Bohrung 14 verläuft schräg in Richtung des Rohrstücks 11 und mündet in einer Bohrung 15, die mit dem Innern des Rohrstücks 11 in Verbindung steht. Am Rüssel ist weiterhin eine Entlüftungsbohrung 16 vorgesehen, die an der Außenseite des Rohrstücks 11 mündet.

Der Druck, der im Innern der Druckluftleitung 1 herrscht, herrscht in gleicher Weise im Innern des Rohrstücks 11. Über die Bohrungen 15, 14 wird der Leitung 9 vom Innern des Rohrstücks 11 Druckluft zugeführt. Dies gilt in entsprechender Weise auch für die Leitung 8 bezüglich der dort nicht dargestellten Borhungen 14 und 15. Zwischen den Abdichtungen 12, 13 herrscht über die Entlüftungsbohrung 16 Umgebungsdruck. Im Bereich zwischen den Abdichtungen 12, 13 ist das clastische Dichtband 3 vom Schlitz 2 abgehoben, wie dies deutlich die Figur 1 zeigt. Wegen der Abdichtungen 12, 13 kann jedoch im Bereich zwischen den Abdichtungen 12, 13 über den vom Dichtband 3 nicht überdeckten Schlitz 2 keine Druckluft austreten.

Um die Reibung zwischen dem Rüssel 10 und dem Dichtband 3 möglichst gering zu halten, weist der Rüssel 10 drei Rollen 17 auf, die gegen die Unterseite des Dichtbands 3 anliegen.

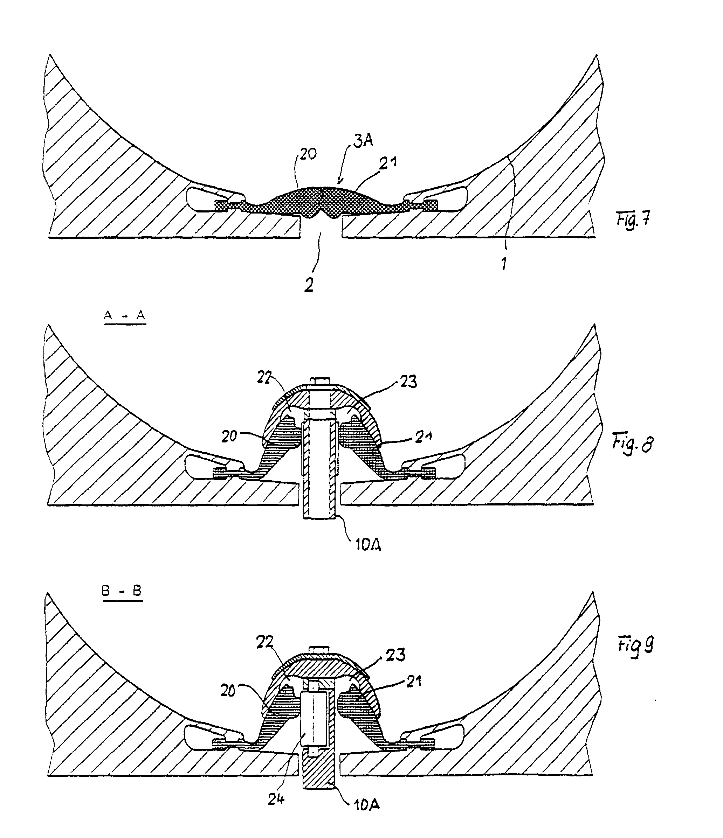

Bei der Ausführungsform nach den Figuren 6 bis 9 ist der Rüssel 10A in Längsrichtung der Druckluftleitung 1 gesehen schiffchenförmig ausgebildet. Das Dichtband 3A besteht aus zwei einander überlappenden Teilen 20, 21, welche vom Rüssel 10A nach oben verschwenkt werden. Der Rüssel weist zwei in Längsrichtung verlaufende Nuten 22, 23 auf, gegen welche die freien Enden der beiden Teile 20, 21 des Dichtbands 3A geschwenkt werden. Der Rüssel besitzt vertikal angeordnete Rollen 24, 25, die gegen die Unterseiten der beiden Teile 20, 21 des Dichtbands 3A zur Reibungsverminderung anliegen.

## Patentansprüche

1. Vorrichtung zum Versorgen eines längs einer Druckluftleitung (1) verfahrbaren Verbrauchers mit Druckluft, bei der die Druckluftleitung (1) einen längs verlaufenden und durch ein elastisches Dichtband (3; 3A) zur Umgebung hin abgedichteten Schlitz (2) aufweist, über den ein mit dem Verbraucher verbundener hohler Rüssel (10; 10A) in das Innere der Druckluftleitung (1) ragt, wobei das Dichtband im Bereich des Rüssels (10; 10A) von diesem deformiert wird und der Rüssel (10; 10A) in einem in der Druckluftleitung (1) verschiebbaren Rohrstück (11) mündet, das an seinen Enden zur Wandung der Druckluftleitung (1) durch Abdichtungen (12, 13) abgedichtet ist, deren Abstand größer ist als der vom Rüssel (10; 10A) deformierte Bereich des Dichtbands (3; 3A), **dadurch gekennzeichnet, daß** das Dichtband (3, 3A) von dem Rüssel (10, 10A) in das Innere der Druckluftleitung (1) geklappt wird und daß die Abdichtungen (12, 13) an beiden Enden des Rohrstücks (11) das Dichtband (3; 3A) in Schließstellung halten.

2. Vorrichtung nach Anspruch 1, **dadurch gekennzeichnet, daß** das Dichtband (3) flach ausgebildet ist, an einer Längsseite mit dem einen Schlitzrand (4) verbunden ist und innenseitig am anderen Schlitzrand aufliegt.

3. Vorrichtung nach Anspruch 2, **dadurch gekennzeichnet, daß** der Rüssel (10) von einem Schlitzrand (4) etwa tangential zum Rohrstück (11) verläuft und gegen die Unterseite des Dichtbands (3) anliegende Rollen trägt.

4. Vorrichtung nach einem der Ansprüche 1 bis 3, **dadurch gekennzeichnet, daß** der Rüssel (10) schlittenförmig ausgebildet ist und an beiden Seiten das Dichtband (3) untergreifende Rampen aufweist.

5. Vorrichtung nach Anspruch 1, **dadurch gekennzeichnet, daß** der Rüssel (10A) schiffchenförmig und das Dichtband (3A) zweigeteilt ausgebildet ist und der Rüssel (10A) zwischen den beiden Teilen (20, 21) des Dichtbands (3A) hindurchgreift.

6. Vorrichtung nach Anspruch 5, **dadurch gekennzeichnet, daß** die beiden Teile (20, 21) des Dichtbands (3A) mit den Schlitzrändern verbunden sind und sich mit ihren freien Enden überlappen.

7. Vorrichtung nach Anspruch 5 oder 6, **dadurch gekennzeichnet, daß** der Rüssel (10A) gegen die beiden Teile (20, 21) des Dichtbands (3A) anliegende Rollen (24, 25) trägt.

8. Vorrichtung nach einem der Ansprüche 5 bis 7, **dadurch gekennzeichnet, daß** der Rüssel (10A) zwei in Längsrichtung verlaufende Nuten (22, 23) aufweist, in welche die freien Enden der beiden Teile (20, 21) des Dichtbands (3A) klappen.

9. Vorrichtung nach einem der Ansprüche 1 bis 8, **dadurch gekennzeichnet, daß** das Rohrstück (11) im Bereich des Rüssels (10, 10A) abgeflacht ist.

10. Vorrichtung nach einem der Ansprüche 1 bis 9, **dadurch gekennzeichnet, daß** die Druckluftleitung (1) Laufbahnen (6) für den Verbraucher aufweist.

## Claims

1. Device for supplying compressed air to a consumer displaceable along a compressed air line (1), in which the compressed air line (1) exhibits a slit (2) which runs longitudinally and is sealed to the environment by an elastic sealing strip (3; 3A) and through which a hollow nozzle (10; 10A) connected to the consumer projects into the interior of the compressed air line (1), whereby the sealing strip is deformed in the area of the nozzle (10; 10A) by the latter and the nozzle (10; 10A) debouches into a piece of pipe (11) which is displaceable in the compressed air line (1) and at its ends is sealed to the wall of the compressed air line (1) by seals (12, 13) with a spacing which is greater than the area of the sealing strip (3; 3A) deformed by the nozzle (10; 10A), **characterised in that** the sealing strip (3, 3A) is folded into the interior of the compressed air line (1) by the nozzle (10, 10A) and **in that** the seals (12, 13) hold the sealing strip (3; 3A) in the closed position at the two ends of the piece of pipe (11).

2. Device according to claim 1, **characterised in that** the sealing strip (3) is flat, is connected with one edge (4) of the slit on one longitudinal side and lies on the other edge of the slit on the inside.

3. Device according to claim 2, **characterised in that** the nozzle (10) runs from one edge (4) of the slit roughly tangentially to the piece of pipe (11) and carries rollers bearing on the underside of the sealing strip (3).

4. Device according to one of claims 1 to 3, **characterised in that** the nozzle (10) is sledge-shaped and on both sides exhibits ramps gripping under the sealing strip (3).

5. Device according to claim 1, **characterised in that** the nozzle (10A) is boat-shaped and the sealing strip (3A) is divided in two, and the nozzle (10A) engages through between the two parts (20, 21) of the sealing strip (3A).

6. Device according to claim 5, **characterised in that** the two parts (20, 21) of the sealing strip (3A) are connected to the edges of the slit and overlap at their free ends.

7. Device according to claim 5 or 6, **characterised in that** the nozzle (10A) carries rollers (24, 25) bearing on the two parts (20, 21) of the sealing strip (3A).

8. Device according to one of claims 5 to 7, **characterised in that** the nozzle (10A) exhibits two slots (22, 23) which run in the longitudinal direction and into which the free ends of the two parts (20, 21) of the sealing strip (3A) fold.

9. Device according to one of claims 1 to 8, **characterised in that** the piece of pipe (11) is flattened in the area of the nozzle (10, 10A).

10. Device according to one of claims 1 to 9, **characterised in that** the compressed air line (1) exhibits tracks (6) for the consumer.

## Revendications

1. Dispositif permettant d'alimenter en air comprimé un utilisateur déplaçable le long d'une conduite d'air comprimé (1), dans lequel la conduite d'air comprimé (1) comporte une fente (2) qui s'étend longitudinalement, dont l'étanchéité vis-à-vis du milieu environnant est assurée par une bande d'étanchéité (3 ; 3A) élastique à travers laquelle un museau (10 ; 10A) creux relié à l'utilisateur fait saillie à l'intérieur de la conduite d'air comprimé (1), la bande d'étanchéité étant déformée, dans la zone du museau (10 ; 10A), par celui-ci et le museau (10 ; 10A) débouchant dans un tronçon de tube (11) qui peut être déplacé en translation dans la conduite d'air comprimé (1) et dont l'étanchéité est assurée à ses extrémités vis-à-vis de la paroi de la conduite d'air comprimé (1) au moyen de garnitures d'étanchéité (12, 13) dont l'espacement est supérieur à la zone de la bande d'étanchéité (3 ; 3A) qui est déformée par le museau (10 ; 10A), **caractérisé en ce que** la bande d'étanchéité (3, 3A) est rabattue par le museau (10, 10A) à l'intérieur de la conduite d'air comprimé (1) et **en ce que** les garnitures d'étanchéité (12, 13) situées aux deux extrémités du tronçon de tube (11) maintiennent la bande d'étanchéité (3 ; 3A) en position de fermeture.

2. Dispositif suivant la revendication 1, **caractérisé en ce que** la bande d'étanchéité (3) a une forme plate, est reliée par un côté longitudinal à l'un des bords de fente (4) et est en appui du côté intérieur sur l'autre bord de fente.

3. Dispositif suivant la revendication 2, **caractérisé en ce que** le museau (10) s'étend, à partir d'un bord de fente (4), d'une manière approximativement tangentielle au tronçon de tube (11) et porte des galets appliqués sur la face inférieure de la bande d'étanchéité (3).

4. Dispositif suivant l'une des revendications 1 à 3, **caractérisé en ce que** le museau (10) est réalisé en forme de chariot et comporte sur les deux côtés des rampes passant par-dessous la bande d'étanchéité (3).

5. Dispositif suivant la revendication 1, **caractérisé en ce que** le museau (10A) est réalisé en forme de navette et la bande d'étanchéité (3A) réalisée en deux parties et le museau (10A) passe entre les deux parties (20, 21) de la bande d'étanchéité (3A).

6. Dispositif suivant la revendication 5, **caractérisé en ce que** les deux parties (20, 21) de la bande d'étanchéité (3A) sont reliées aux bords de fente et se chevauchent par leurs extrémités libres.

7. Dispositif suivant la revendication 5 ou 6, **caractérisé en ce que** le museau (10A) porte des galets (24, 25) appliqués en appui sur les deux parties (20, 21) de la bande d'étanchéité (3A).

8. Dispositif suivant l'une des revendications 5 à 7, **caractérisé en ce que** le museau (10A) comporte deux rainures (22, 23), s'étendant suivant la direction longitudinale, dans lesquelles se rabattent les extrémités libres des deux parties (20, 21) de la bande d'étanchéité (3A).

9. Dispositif suivant l'une des revendications 1 à 8, **caractérisé en ce que** le tronçon de tube (11) présente une forme aplatie dans la zone du museau (10, 10A).

10. Dispositif suivant l'une des revendications 1 à 9, **caractérisé en ce que** la conduite d'air comprimé (1) comporte des pistes de déplacement (6) pour l'utilisateur.
